# EUROPEAN PATENT SPECIFICATION

(11) **EP 2 454 670 B1**
(45) Date of publication and mention of the grant of the patent: **17.02.2016**
(21) Application number: 10800189.2
(22) Date of filing: 30.04.2010
(51) Int. Cl.: G06F 11/14

(54) **OPERATING SYSTEM RESTORATION USING REMOTE BACKUP SYSTEM AND LOCAL SYSTEM RESTORE FUNCTION**
BETRIEBSSYSTEMWIEDERHERSTELLUNG MIT EINEM FERN-BACKUPSYSTEM UND EINER LOKALEN SYSTEMWIEDERHERSTELLUNGSFUNKTION
RESTAURATION D'UN SYSTÈME D'EXPLOITATION AU MOYEN D'UN SYSTÈME DE SAUVEGARDE À DISTANCE ET D'UNE FONCTION DE RESTAURATION DE SYSTÈME LOCAL

(30) Priority: 15.07.2009 US 503569
(43) Date of publication of application: 23.05.2012
(73) Proprietor: Autonomy, Inc., San Francisco, CA 94105 (US)
(72) Inventor: CLARK, William R., Southbridge Massachusetts 01550 (US)
(74) Representative: Hufton, David Alan
(86) International application number: PCT/US2010/033218
(87) International publication number: WO 2011/008323

(56) References cited:
- WO-A2-2009/026028
- US-A1- 2002 049 883
- US-A1- 2003 172 130
- US-A1- 2005 086 445
- US-A1- 2007 208 918
- US-A1- 2008 162 599
- US-B1- 7 313 719

## Description

### BACKGROUND

The present invention is related to the field of computer system backup and restoration, and more particularly to the backup and restoration of a computer's operating system.

Existing computer backup/restore systems generally provide for remote backup storage of copies of files from a computer, and later restoration of such files from the remote backup system back to the computer as may be needed. Most existing systems readily support the backup and restoration of user data files, and some support the backup and restoration of system files that form part of the computer's operating system. While systems of the latter type theoretically provide for restoration of a computer's operating system in the event of loss or corruption of critical operating system files, in practice such restoration may be difficult or impossible even though the files have been backed up and are available for restoration. This difficulty arises in part because of the great complexity of modem operating systems and the large amount of dynamic operating state information that they maintain. It may be impossible for a backup system to fully and coherently re-create a usable operating state of an operating system. In many cases it is necessary for a user to painfully re-create a specific operating state by re-installing the operating system and then applying all necessary incremental changes to it.

Some operating systems, notably the Windows® family of operating systems from Microsoft Corporation, provide a "system restore" function that enables the operating system to be fully restored to a specific configuration as represented by a "restore point". Periodically during operation, the operating system creates a set of restore point files, which are copies of critical operating system files as they exist at the moment the restore point is being created. Examples of such files include certain executable (program) files, dynamically linked libraries (DLLs), and the system "registry", which is a large collection of files specifying the entire hardware and software configuration of the computer. The restore point files are saved on a local storage device of the computer, typically a magnetic disk drive on which the operating system is also stored. One main use of the system restore function is to "roll back" the operating system from a current operating state to an operating state at a previous restore point. This roll-back operation can be useful to recover from hardware or software changes that introduce problems in the operation of the computer. In this use, the operating system is executing and itself performs the roll-back. In some systems, notably the newer Vista®-based systems, the system restore function can be initiated from a "system recovery environment" to create a functioning operating system from a previously saved restore point.

Document US 7 313 719 discloses restore of backup to computer system with file system volume attribute modification. It proposes making a record of a system configuration by client software executing on the client being backed up, or by server software residing on a bare metal restore server.

### SUMMARY

Existing backup and restore systems/techniques as discussed above may suffer from certain undesirable limitations. Conventional remote backup/restore systems may not adequately provide for restoration of a computer's operating system to a coherent operating state. System restore functions may rely on a locally stored copy of restore points and are therefore vulnerable to certain failures that will render the restore-point files unavailable, such as a failure of the local storage device.

Disclosed is a backup and restoration technique that enables complete recovery of an operating system even in the event of such catastrophic events as severe data corruption or complete failure of a computer's storage device. System files as well as user files can be restored to a target computer (either the original computer from which they were backed up or another computer), without the need for the target computer to be in a bootable state. The technique provides both flexible system restoration as well as greater reliability due to the use of remote storage.

In a disclosed method, during normal operation of the computer, a backup operation is periodically performed during which user files and system files are copied to a separate backup system for persistent storage. The system files include sets of restore-point files from a source storage device of the computer, the restore-point files having been created by an operating system of the computer and each set of restore-point files being constituents of the operating system at a corresponding point in time. A restoration operation is subsequently performed, for example after an event which causes loss of the restore-point files from the source storage device. The restoration operation includes accessing a recovery storage device which stores (a) a recovery program and (b) copies of the user files and system files as previously provided to the backup system. The computer is first operated in a limited-functionality recovery mode including (a) executing the recovery program to restore the restore-point files from the recovery storage device to a target storage device, which may be the same as or different from the source storage device from which the files were backed up, and (b) executing a system restore function of the computer with a selected set of the restored restore-point files to restore the operating system as constituted at the corresponding point in time. Subsequently, the computer is operated in a full-functionality operating mode including (a) executing the operating system as so restored, and (b) executing the recovery program to restore the user files from the recovery storage device to the computer for subsequent normal use by a user of the computer.

The technique also involves backup and restoration services provided by the backup system as more specifically described and claimed below. The technique provides for robust restoration of an operating system relying on the operating system's own system restore function using restore points, while minimizing dependence on the level of operability of the source storage device and operating system upon occurrence of a data loss event.

These objects are accomplished by the invention, which is defined in detail in the appended independent claims 1, 6, 8 and 14 whereas the appended dependent claims define preferred embodiments of the invention.

### BRIEF DESCRIPTION OF THE DRAWINGS

The foregoing and other objects, features and advantages will be apparent from the following description of particular embodiments of the invention, as illustrated in the accompanying drawings in which like reference characters refer to the same parts throughout the different views. The drawings are not necessarily to scale, emphasis instead being placed upon illustrating the principles of various embodiments of the invention.
Figure 1 is a block diagram of a networked computer system having client computers and a backup system;
Figure 2 is a block diagram illustrating structure of a computer such as a client computer or server computer;
Figure 3 is a flow diagram of a backup sequence;
Figure 4 is a flow diagram of a restore sequence; and
Figure 5 is a flow diagram depicting backup and restore operation of a client computer and the backup system.

### DETAILED DESCRIPTION

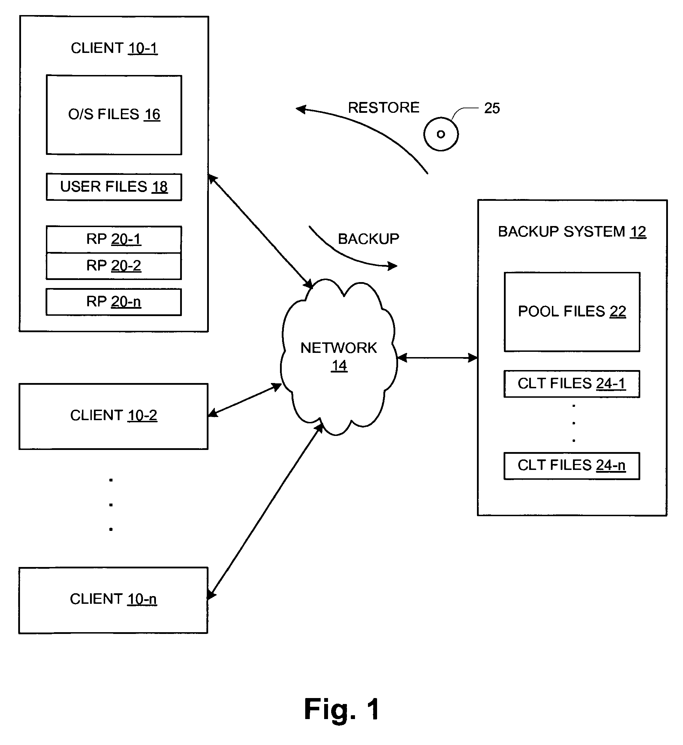

Figure 1 shows a computer system including client computers 10 (shown as CLIENTs 10-1, 10-2, etc.) all coupled to a backup system 12 by a data communications network 14. The client computers 10 may be desktop or portable personal computers, for example, or in some cases may be server computers such as found on departmental local-area networks (LANs). The backup system 12 is a computer system typically including one or more server computers with relatively large-capacity attached storage resources, such as high-capacity magnetic or optical disk storage and/or tape storage, etc. The network 14 may be a LAN or a more wide-area network such as the Internet for example.

In operation, each client computer 10 executes an operating system which employs operating system (O/S) files 16, as well as various application programs which generate user data files (USER FILES) 18. Examples of user data files include e-mail files, word processing files, spreadsheets, etc. The collection of O/S files 16 is generally quite large and varied. It includes program or "executable" files, dynamically linked library (DLL) files, registry file(s) that store comprehensive information about the current hardware and software configuration of the client computer, and many other kinds of files which are used by the operating system during normal operation. Examples of common operating systems include UNIX-based systems such as Linux and the Windows® family of operating systems from Microsoft (e.g., Windows XP® and Windows Vista®).

Some operating systems (notably including the Windows family) include a "system restore" function which is used to periodically save certain of the O/S files 16 for potential later use in "rolling back" or restoring the operating system to a previous configuration. The points in time at which these save operations occur are referred to as "restore points", and the set of files saved at each restore point is referred to herein as a set of "restore-point files". Figure 1 shows sets of restore-point (RP) files 20-1, 20-2, ..., from respective restore points, stored on the client computer 10-1. In general, sets of restore-point files 20 are created by the operating system of each client computer 10 and stored locally at the respective client computer 10. The restore-point files 20 are commonly saved in a directory or folder that is controlled by the operating system.

In operation, the backup system 12 provides backup and restore services to the client computers 10 as described in more detail herein. Backup operations are generally conducted over the network 14, with the clients 10 using the network 14 to transfer files to the backup system 12 for persistent storage. During restoration operations, the backup system 12 creates a recovery storage device 25 such as an optical disk which includes copies of files to be restored to a client computer 10 as well as a "recovery agent" program, and the recovery storage device 25 is sent to a user of a client computer 10 for use in a restoration process as described in more detail below.

The backup computer system 12 maintains both a pool of files (shown as POOL FILES) 22 as well as sets of client computer files (shown as CLT FILES) 24 which are specific to the respective client computers 10 (i.e., CLT FILES 24-1 are stored on behalf of client computer 10-1, CLT FILES 24-2 for client computer 10-2, etc.). Each set of client computer files 24-x includes the user files 18 and some of the restore-point files 20 for the respective client computer 10-x. Specifically, those restore-point files 20 that are unique to a given client computer 10 are stored as part of the client computer files 24 for that client computer 10. It will be appreciated that in a typical networked computer system such as that of Figure 1, many of the O/S files 16 and restore-point files 20 may be identical among the various client computers 10 (for example, many DLL files are identical across client computers 10 running the same operating system). Rather than maintaining many identical copies of such files, the backup computer system 12 maintains only one copy of such files in the pool files 22, along with data identifying all of the client computers 10 for which the one copy serves as a backed-up file. This feature is referred to as "file pooling" herein.

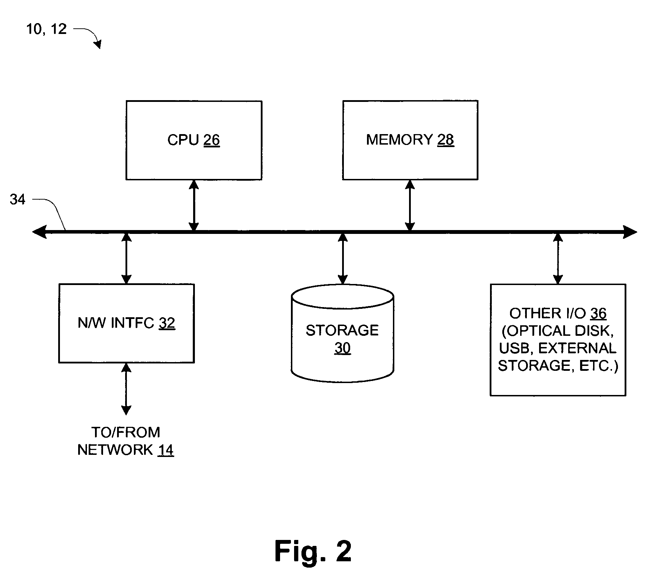

Figure 2 is a block diagram depicting the general structure of a computer such as a client computer 10 or a server computer which may constitute part or all of the computing resources of the backup system 12. A central processing unit (CPU) 26, memory 28, storage 30 and a network interface 32 are all interconnected by interconnect circuitry 34, which may include one or more high-speed data transfer buses as generally known in the art. Storage 30 is for non-volatile storage of the user files 18, O/S files 16 and restore-point files 20, and typically includes one or more magnetic disks and/or flash memory devices. Programs and data are transferred into the memory 28, from which the programs are executed and the data is accessed by the CPU 26. The network interface 32 provides for the transfer of data to and from other systems connected to the network 14. The client computer 10 and/or server will also generally include one or more additional input/output (I/O) interfaces 36 to auxiliary devices or ports, for example an optical disk drive and/or a USB (universal serial bus) port. As described below, such an auxiliary device or port can be used to enable the client computer 10 to access the recovery storage device 25 to obtain the files to be restored in a restoration operation. Additionally, a server that is part of the backup system 12 may include a storage-oriented interface such as a FibreChannel port for example.

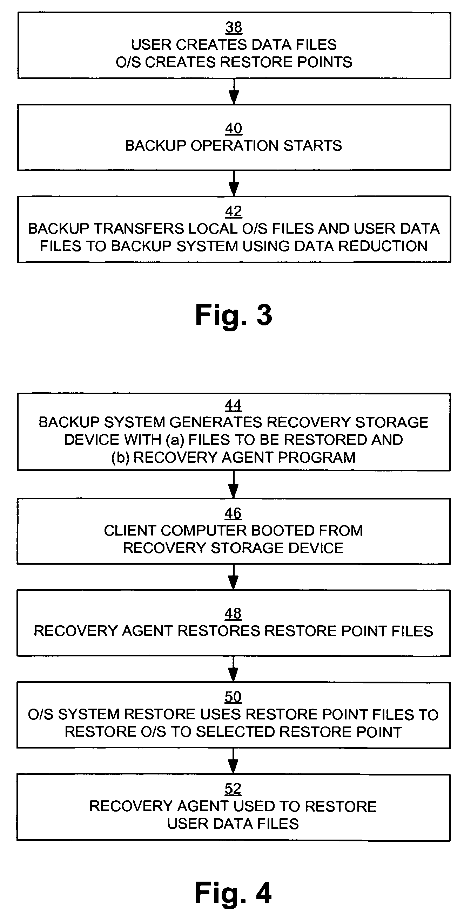

Figures 3 and 4 illustrate backup and restore sequences respectively. In the backup sequence of Figure 3, at step 38 a user of a "source" client computer 10 creates user data files and an operating system (O/S) of the source client computer 10 creates the restore-point files of response points. These files are saved in source storage 30 of the client computer 10. At step 40, a backup operation starts, which may be pursuant to some prearranged schedule or on user or system demand. At step 42, the backup operation transfers the locally stored user data files and O/S files to the backup system 12 via the network 14. As indicated, this transfer preferably employs data reduction techniques to make efficient use of transmission bandwidth in the network 14 as well as storage resources in the backup system 12. Specific data reduction techniques are described below.

Figure 4 shows the restore sequence, which typically is initiated by user request based on the occurrence of an event which necessitates the restoration, such as the failure of a storage device at a client computer 10 or the need/desire to move a user from one client computer 10 to another. The restoration is performed to target storage on a target client computer 10, which may be the same as or different from the source storage and/or source client computer 10 respectively, depending on the reason for the restoration.

At step 44 the backup system 12 generates a recovery storage device 25 which includes (a) the files to be restored and (b) a recovery agent program that can be executed by the target client computer 10 as part of the restoration process. The files to be restored typically include the user data files 18 as well as restore-point files 20 that were previously transferred to the backup system 12 in a backup operation (see Figure 3). As previously mentioned, the recovery storage device 25 may be a removable storage medium such as an optical disk or a plug-in flash memory device (e.g., USB memory stick). The recovery storage device 25 is mailed or otherwise provided to the user of the target client computer 10.

At step 46, the target client computer 10 is booted from the recovery storage device 25, and at step 48 the recovery agent is executed from the recovery storage device 25 to restore the restore-point files to the target storage 30 of the target client computer 10. Once the restore-point files are restored, then at step 50 the O/S system restore function is executed with a user selection of a restore point, thereby restoring the O/S to the selected restore point. At step 52 the recovery agent is used to also restore the user data files to the target storage 30.

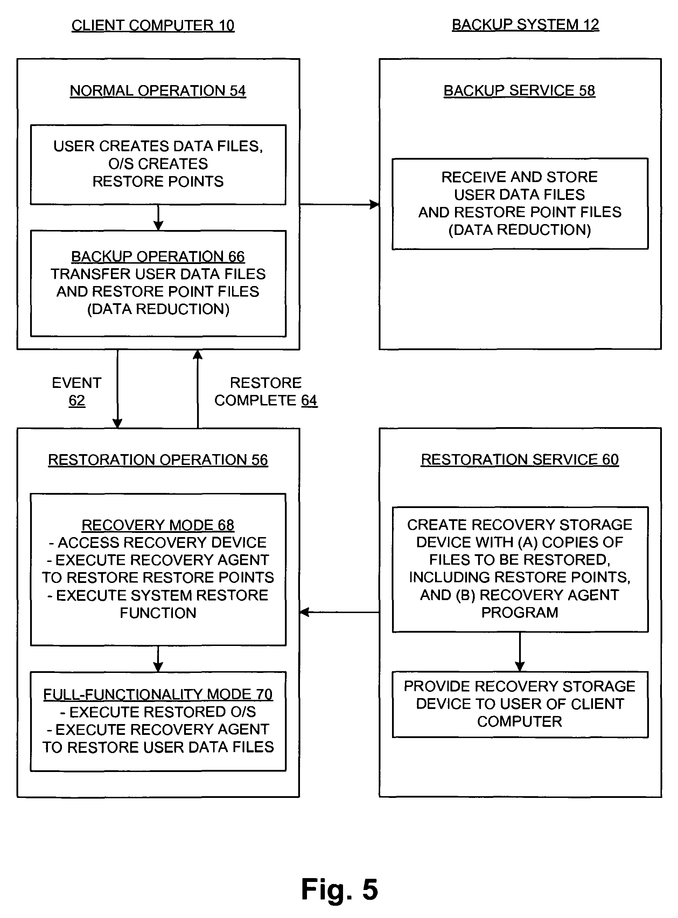

Figure 5 provides an alternative flow-type description of backup and restore operations of a client computer 10 and the backup system 12 in side-by-side fashion. The client computer 10 engages in normal operation 54 and a restoration operation 56, while the backup system 12 provides a backup service 58 and a restoration service 60 on behalf of and in communication with the client computer 10. The operations depicted in Figure 5 are performed between the backup system 12 and each of the client computers 10 of the system of Figure 1. Additionally, as described below, the backup system 12 may enable restoration to one (target) client computer 10 of files that were backed up from another (source) client computer 10, for example to enable a user to move an operating configuration to a new hardware platform (computer).

Referring to Figure 5, during normal operation 54, a user of the client computer 10 creates and stores the user data files 18, and the operating system of the client computer 10 creates the sets of restore-point files 20 at restore points. Restore points can occur under various conditions. For example, they may occur at regular intervals such as once per day. They may also occur in response to certain activities such as installation of new hardware/software or a significant update or upgrade to the operating system.

Also during normal operation 54, the client computer 10 performs a backup operation 66, which again may be done periodically and/or as specifically necessitated or requested. The backup operation 66 may be performed by a backup application program executing on the client computer 10, which may be part of or separate from the operating system. An example of a backup application program is a backup agent which is a component of a Connected® Backup service available from Iron Mountain, Inc. During the backup operation 66, the client computer 10 transfers copies of the user data files 18 and the restore-point files 20 to the backup system 12, where the backup service 58 receives the files and stores them persistently for potential later use in a recovery/restoration operation. As previously indicated, the backup operation 66 and backup service 58 may employ data reduction techniques which reduce the amount of data that is transferred to and stored by the backup system 12. Examples of these data reduction techniques are now described.

A first data reduction technique is aimed at eliminating the transmission and storage of duplicate files, by either a single client computer 10 and even by different client computers 10. When a file is transferred using this technique, it is saved in the pool files 22 (Figure 1). A hash is computed of all the bytes of the file and the hash is stored in association with the file in the backup system 12. Prior to any file being transferred, a comparison is made between the hash and file name of the file and the hashes and file names in the pool files 22. If a match is found then a new copy of the file is not sent. Instead, data is stored which indicates that the file is identical to a previously saved file, and which includes a reference to the matching file in the pool files 22. An example of this technique is a function called SendOnce® which is part of the Connected® Backup of Iron Mountain Inc.

It will be appreciated that this first data reduction technique can increase backup efficiency when there is significant file duplication across multiple backup operations 66. In the case of the restore-point files 20, there is typically considerable duplication of certain file sets across a series of restore points, including for example executable files and files forming the system registry, and therefore this technique can advantageously provide greater backup efficiency for these files. Of the thousands of files constituting a given restore point, it may be necessary to transfer only a small fraction (e.g., tens) of files that are new since the last restore point.

A second data reduction technique sends only the changed data in files, saving transmission time and storage requirements. This mechanism relies on computing a series of hashes of a file. One hash is computed for each block of the file (where "block" refers to a fixed-size set of successive bytes). The hashes are stored on the client computer 10 for every file that is backed up. A file is not re-sent unless the hash of a particular block changes in a subsequent backup. This technique can be useful for large files which change only slightly over time, such as some registry files. In this case a complete "base" version of the file is transferred initially, and during subsequent backup operations 66 only the blocks that differ from the base version are transferred. For each changed version that is backed up in this manner, the backup system 12 stores data indicating that the file is a changed version of the base file, along with references to the changed blocks. Over a long enough period of time as the number of changes grows, it may be desirable to re-transmit an up-to-date full version of the file, which could be done at regular intervals for example or based on a size threshold for the number of changed blocks. For example, once it becomes necessary to transfer one-half of the blocks of the file, it may be desirable to instead send a new full copy. Subsequent backups can revert to the changed-block technique with reference to the new full copy. An example of this second technique is a function called Delta Block® which is part of the Connected® Backup of Iron Mountain Inc.

As a result of the backup operations 66 and backup service 58, the backup system 12 stores backup copies of the user files 18 and restore-point files 20 in the pool files 22 and client computer files 24, with some of the files being stored as respective sets of changed blocks referred to separate full versions of the files pursuant to the second technique described above. These files are available for use in providing the restoration service 60 upon occurrence of the event 62, as now described.

The client computer 10 transitions from normal operation 54 to the restoration operation 56 upon occurrence of an event 62 that creates the need for restoration of files, and transitions back to normal operation 54 when the restoration operation 56 is completed as indicated at 64. The event 62 may be a hardware or software condition that causes the loss of any/all of the user files 18, O/S files 16 or restore-point files 20. Examples of such conditions include failure of a disk drive at the client computer 10, as well as corruption of critical O/S files by a computer virus program that is permitted to execute on the client computer 10.

It will be appreciated that part of providing the restoration service 60 is to transfer the files stored in the backup system 12 to the client computer 10. If the client computer 10 has sufficient functionality, it may be capable of receiving the files via the network 14. However, it is assumed herein that the event 62 is of a nature that prevents the client computer 10 from executing its full-functionality operating system and therefore cannot receive files in this manner. In this condition, the client computer 10 may also be described as "non-bootable", meaning that it cannot start up an operating system to the point of normal operation.

In this case, it is assumed that there is an out-of-band process for initiating the restoration service 60 at the backup system 12. For example, a user may place a telephone call to an operator of the backup system 12 or use another computer 10 to issue an electronic request for the restoration service 60. As part of the restoration service 60, the backup system 12 creates the recovery storage device 25 that contains copies of the files to be restored to the client computer 10, these files being obtained from the pool files 22 and client computer files 24 for the particular client computer 10 for which restoration is requested. The files are preferably stored on the recovery storage device 25 in the same form as originally stored in the client computer 10 from which they were backed up, which means that the backup system 12 performs whatever data expansion is necessary to undo any data reduction performed during the backup process. Specifically, this may mean creating multiple copies of files that may have been saved only once pursuant to the first data reduction technique described above, and creating full versions of files that were saved as a base version plus changed blocks pursuant to the second data reduction technique. In this latter case, a full version is obtained by writing the changed blocks to the base version of the file.

Included on the recovery storage device 25 are copies of the restore-point files 20 for the client computer 10 to enable restoration of the operating system. The recovery storage device 25 also preferably includes a recovery agent program which is to be executed by the client computer 10 as part of the restoration operation 56 as described below. Once the recovery storage device 25 is created, it is provided to the client computer system 10 for use in the restoration operation 56. As an example, the recovery storage device 25 may include a set of optical storage discs or one or more flash memory devices which are shipped or otherwise delivered to a user of the client computer 10. The user inserts the recovery storage device 25 into an appropriate port of the client computer 10 and then executes the restoration operation 56.

The restoration operation 56 includes an initial recovery mode of operation 68 and a subsequent full-functionality operating mode 70. The recovery mode 68 is an operating mode of limited functionality. It may correspond to the so-called "safe mode" of operating a personal computer. In the newer Windows Vista® operating system, there is a specific "recovery environment" that can be entered in which limited functions are provided to recover the operating system and attempt to reinitiate normal operation with the recovered operating system. These are examples of the recovery mode 68. The full-functionality operating mode 70 corresponds to normal operation of the operating system as normally booted, which of course in the present context presumes that the operations in the recovery mode 68 successfully make the operating system bootable.

In the recovery mode 68, the client computer 10 accesses the recovery storage device 25 which has been provided by the restoration service 60 as described above. In the case of optical media, this will entail reading data from an optical disk drive in the client computer 10, and in the case of a flash memory device it may entail reading data from a USB or similar input/output port. The client computer 10 executes the recovery agent program which is stored on the recovery storage device 25. Under user control, the recovery agent copies the backed-up restore-point files 20 from the recovery storage device to an appropriate system area of target storage 30 (such as a magnetic disk drive) of the client computer 10. In Windows® XP and Vista® systems, the system area is a specific folder named System Volume Information. Newer server operating systems may have a separate partition for system restore. Once the restore-point files 20 have been copied to this location, the client computer 10 then executes a system restore function which typically will be available as part of the recovery environment (i.e., provided by the BIOS or other system software which is permitted to execute in the recovery mode 68). The system restore function is capable of rebuilding a fully functional instance of the operating system from an individual set of restore point files 20-x of a given restore point (i.e. restore point 20-2). The system restore function typically enables a user to select which restore point the operating system is to be restored to.

Upon completion of the system restore function, the client computer is re-started into the full-functionality operating mode 70 executing the operating system as restored in the recovery mode 68. At this point the user may again execute the recovery agent from the recovery storage device 25 in order to recover/restore the user data files 18 to the client computer. Upon completion of this operation, the client computer 10 has been fully restored to its normal operating condition, and as shown at 64 it then transitions back to normal operation 54.

Although the foregoing describes the restoration of files to the same client computer 10 from which the files were backed up, the disclosed technique can also be used to restore the files to a computer other than the one from which they were backed up. This operation may be desirable when a user's computer is to be replaced, for example. Thus in general the backup and restore operations involve first and second computers 10, which in some cases can be the same computer and in other cases may be distinct computers. Additionally, even in the case of restoring files to the same computer 10, it may be desirable to restore the files to a different storage device than the one the files were backed up from. This may be desirable when the original storage device has failed and is replaced, for example. Thus the backup and restore operations may involve distinct source and target storage devices respectively. Other variations of the disclosed technique may also be utilized.

## Claims

1. A method by which a computer engages in backup and restore operations, comprising:
during normal operation, periodically performing a backup operation during which the computer copies user files and system files from source storage of the computer to a separate backup system for persistent storage thereon, the system files including sets of restore-point files from the source storage, the restore-point files having been created by an operating system of the computer and each set of restore-point files being constituents of the operating system at a corresponding point in time; and
during a subsequent restoration operation:
(1) accessing a recovery storage device made accessible to the computer, the recover storage device storing a recovery program and copies of the user files and system files as persistently stored by the backup system;
(2) operating the computer in a limited-functionality recovery mode including (a) executing the recovery program to restore the restore-point files from the recovery storage device to target storage of the computer, and (b) executing a system restore function of the computer with a selected set of the restored restore-point files to restore the operating system as constituted at the corresponding point in time; and
(3) subsequently operating the computer in a full-functionality operating mode including (a) executing the operating system as so restored, and (b) executing the recovery program to restore the user files from the recovery storage device to the computer for subsequent normal use by a user of the computer.

2. The method of claim 1 wherein performing the backup operation includes utilizing a data reduction technique which includes:
determining, prior to sending a particular restore-point file, whether the particular restore-point file was previously copied to the backup system in a previous backup operation; and
copying the particular restore-point file to the backup system only if the particular restore-point file was not so previously copied to the backup system, and otherwise refraining from copying the particular restore-point file to the backup system.

3. The method of claim 1 wherein performing the backup operation includes utilizing a data reduction technique which includes:
as part of copying a particular restore-point file, determining which ones of a plurality of blocks of the particular restore-point file have changed since a previous version of the particular restore-point file was copied to the backup system; and
copying to the backup system only those blocks of the particular restore-point file that are determined to have so changed.

4. The method of any of claims 1 to 3 wherein the source storage device is distinct from the target storage device.

5. The method of any of claims 1 to 3 wherein the recovery storage device includes a removable storage medium selected from the group consisting of optical media and flash memory, and wherein accessing the recovery storage device includes accessing a physical input/output port of the computer to which the removable storage medium has been attached.

6. A computer, comprising:
a processor, memory, storage, network interface and input/output circuitry all interconnected by one or more interconnection buses; and
software, including a backup agent and an operating system, stored on the storage and executable by the processor from the memory to perform a method of performing backup and restore operations, the software adapted to perform the method of one of the preceding claims.

7. The computer of claim 6 wherein the computer includes a physical input/output port at which a removable storage medium can be attached, the removable storage medium being selected from the group consisting of optical media and flash memory, and wherein accessing the recovery storage device includes accessing the physical input/output port of the computer.

8. A method by which a backup system provides backup and restore services to one or more computers, comprising:
periodically providing a backup service of receiving user files and system files from a first one of the computers and persistently storing the received files, the system files including sets of restore-point files from a system area of a source system storage device of the first computer, the restore-point files having been created by an operating system of the first computer and each set of restore-point files being constituents of the operating system at a corresponding point in time; and
subsequently providing a restoration service to a second one of the computers, the restoration service including creating a recovery storage device storing a recovery program and copies of the user files and system files as received by the backup system when providing the backup service to the first computer, the recovery storage device being created so as to be usable by the second computer (1) in a limited-functionality recovery mode to execute the recovery program to restore the restore-point files from the recovery storage device to a system area of a target system storage device, such that a system restore function of the second computer can be executed with a selected set of the restored restore-point files to restore the operating system as constituted at the corresponding point in time, and (2) during a subsequent full-functionality operating mode to execute the recovery program to restore the user files from the recovery storage device to the computer for subsequent normal use by a user of the second computer.

9. The method of claim 8 wherein:
providing the backup service includes utilizing a data-reduction technique which includes, for a given restore point, receiving and storing less than all the restore-point files of the restore point, and for non-received and non-stored restore-point files storing data indicating that the files are identical to corresponding restore-point files of a previous restore point; and
providing the restoration service includes creating all the restore-point files of the given restore point, those restore-point files that were not received and stored for the given restore point being copied from the corresponding restore-point files of the previous restore point as indicated by the data.

10. The method of claim 8 wherein each of the restore-point files is constituted by blocks, and wherein:
providing the backup service includes utilizing a data-reduction technique which includes, for a particular restore-point file, receiving and storing only those blocks of the particular restore-point file that have changed since a previous full version of the particular restore-point file was copied to the backup system, and storing data indicating that the particular restore-point file is identical to the previous full version of the particular restore-point file except for the changed blocks; and
providing the restoration service includes creating the particular restore-point file by applying the changed blocks to the previous full version of the particular restore-point file as indicated by the data.

11. The method of any of claims 8 to 10 wherein:
the first computer is one of two or more computers that both include the same particular restore-point file among their respective restore-point files;
providing the backup service includes utilizing a cross-client pooling technique which includes maintaining only one pooled copy of the particular restore-point file along with data identifying the two or more computers that share the copy of the restore-point file; and
providing the restoration service includes providing the one pooled copy of the particular restore-point file based on the data.

12. The method of any of claims 8 to 10 wherein the recovery storage device includes a removable storage medium selected from the group consisting of optical media and flash memory which can be attached to a physical input/output port of the second computer.

13. The method of any of claims 8 to 10 wherein the first computer is distinct from the second computer.

14. A backup system comprising one or more server computers, at least one of the server computers comprising:
a processor, memory, storage, network interface and input/output circuitry all interconnected by one or more interconnection buses; and
software stored on the storage and executable by the processor from the memory to perform a method of providing backup and restore services to one or more client computers, the software being adapted to perform the method of one of the preceding claims 8 to 13.

15. The backup system of claim 14 wherein the recovery storage device includes a removable storage medium selected from the group consisting of optical media and flash memory which can be attached to a physical input/output port of the second client computer.

## Patentansprüche

1. Verfahren, durch das ein Computer bei Backup- und Wiederherstellungsoperationen eingreift, umfassend:
während des normalen Betriebs, die periodische Durchführung einer Backup-Operation, bei welcher der Computer Benutzerdateien und Systemdateien von einem Quellspeicher des Computers in ein separates Backup-System für ein dauerhaftes Speichern darin kopiert, wobei die Systemdateien Sätze von Wiederherstellungspunktdateien aus dem Quellspeicher umfassen, wobei die Wiederherstellungspunktdateien durch ein Betriebssystem des Computers erstellt wurden und jeder Satz von Wiederherstellungspunktdateien Bestandteilen des Betriebssystems zu einem entsprechendem Zeitpunkt entspricht; und
während einer anschließenden Wiederherstellungsoperation:
(1) Zugreifen auf eine Wiederherstellungsspeichervorrichtung, die dem Computer zugänglich gemacht wird, wobei die Wiederherstellungsspeichervorrichtung ein Wiederherstellungsprogramm und Kopien der Benutzerdateien sowie Systemdateien wie von dem Backup-System dauerhaft gespeichert speichert;
(2) Betreiben des Computers in einem Wiederherstellungsmodus mit eingeschränkter Funktionalität, umfassend (a) das Ausführen des Wiederherstellungsprogramms zur Wiederherstellung der Wiederherstellungspunktdateien aus der Wiederherstellungsspeichervorrichtung in den Zielspeicher des Computers und (b) das Ausführen einer Systemwiederherstellungsfunktion des Computers mit einem ausgewählten Satz der wiederhergestellten Wiederherstellungspunktdateien zur Wiederherstellung des Betriebssystems, wie zu dem entsprechenden Zeitpunkt beschaffen; und
(3) anschließendes Betreiben des Computers in einem Betriebsmodus mit voller Funktionalität, umfassend (a) das Ausführen des Betriebssystems, wie derart wiederhergestellt und (b) das Ausführen des Wiederherstellungsprogramms zur Wiederherstellung der Benutzerdateien aus der Wiederherstellungsspeichervorrichtung auf dem Computer für die anschließende normale Verwendung durch einen Benutzer des Computers.

2. Verfahren nach Anspruch 1, wobei das Durchführen der Backup-Operation das Verwenden einer Datenreduktionsmethode umfasst, die Folgendes umfasst:
Bestimmen, vor dem Senden einer bestimmten Wiederherstellungspunktdatei, ob die bestimmte Wiederherstellungspunktdatei zuvor in einer vorhergehenden Backup-Operation in das Backup-System kopiert wurde; und
Kopieren der bestimmten Wiederherstellungspunktdatei in das Backup-System, nur wenn die bestimmte Wiederherstellungspunktdatei zuvor nicht entsprechend in das Backup-System kopiert wurde und andernfalls das Unterlassen des Kopierens der bestimmten Wiederherstellungspunktdatei in das Backup-System.

3. Verfahren nach Anspruch 1, wobei das Durchführen der Backup-Operation das Verwenden einer Datenreduktionsmethode umfasst, die Folgendes umfasst:
als Teil des Kopierens einer bestimmten Wiederherstellungspunktdatei, das Bestimmen, welche von einer Vielzahl von Blöcken der bestimmten Wiederherstellungspunktdatei sich verändert haben, seit eine vorherige Version der bestimmten Wiederherstellungspunktdatei in das Backup-System kopiert wurde; und
Kopieren, in das Backup-System, nur derjenigen Blöcke der bestimmten Wiederherstellungspunktdatei, für die bestimmt wurde, dass sie sich entsprechend verändert haben.

4. Verfahren nach einem der Ansprüche 1 bis 3, wobei sich die Quellspeichervorrichtung von der Zielspeichervorrichtung unterscheidet.

5. Verfahren nach einem der Ansprüche 1 bis 3, wobei die Wiederherstellungsspeichervorrichtung ein entfernbares Speichermedium umfasst, ausgewählt aus der Gruppe, bestehend aus optischen Medien und Flash-Speichern und wobei das Zugreifen auf die Wiederherstellungsspeichervorrichtung das Zugreifen auf einen physischen Eingangs-/Ausgangsanschluss des Computers umfasst, mit dem das entfernbare Speichermedium verbunden wurde.

6. Computer, umfassend:
einen Prozessor, einen Arbeitsspeicher, einen Speicher, eine Netzwerkschnittstelle und Eingangs-/Ausgangsschaltungen, die alle durch einen oder mehrere Verbindungsbusse verbunden sind; und
Software, umfassend ein Backup-Mittel und ein Betriebssystem, gespeichert in dem Speicher und ausführbar durch den Prozessor von dem Arbeitsspeicher, um ein Verfahren zur Durchführung von Backup- und Wiederherstellungsoperationen durchzuführen, wobei die Software geeignet ist, das Verfahren nach einem der vorhergehenden Ansprüche durchzuführen.

7. Computer nach Anspruch 6, wobei der Computer einen physischen Eingangs-/Ausgangsanschluss umfasst, mit dem ein entfernbares Speichermedium verbunden werden kann, wobei das entfernbare Speichermedium aus der Gruppe ausgewählt wird, bestehend aus optischen Medien und Flash-Speicher und wobei das Zugreifen auf die Wiederherstellungsspeichervorrichtung das Zugreifen auf den physischen Eingangs-/Ausgangsanschluss des Computers umfasst.

8. Verfahren, durch das ein Backup-System Backup- und Wiederherstellungsdienste für einen oder mehrere Computer bereitstellt, umfassend:
periodisches Bereitstellen eines Backup-Dienstes für den Empfang von Benutzerdateien und Systemdateien von einem ersten der Computer und das dauerhafte Speichern der empfangenen Dateien, wobei die Systemdateien Sätze von Wiederherstellungspunktdateien aus einem Systembereich einer Quellsystemspeichervorrichtung des ersten Computers umfassen, wobei die Wiederherstellungspunktdateien von einem Betriebssystem des ersten Computers erstellt wurden und jeder Satz von Wiederherstellungspunktdateien Bestandteilen des Betriebssystems zu einem entsprechendem Zeitpunkt entspricht; und
das anschließende Bereitstellen eines Wiederherstellungsdienstes für einen zweiten der Computer, wobei der Wiederherstellungsdienst das Erstellen einer Wiederherstellungsspeichervorrichtung umfasst, die ein Wiederherstellungsprogramm und Kopien der Benutzerdateien und Systemdateien als von dem Backup-System beim Bereitstellen des Backup-Dienstes für den ersten Computer empfangen, speichert, wobei die Wiederherstellungsspeichervorrichtung so erstellt wird, um von dem zweiten Computer (1) in einem Wiederherstellungsmodus mit eingeschränkter Funktionalität verwendet werden zu können, um das Wiederherstellungsprogramm zur Wiederherstellung der Wiederherstellungspunktdateien aus der Wiederherstellungsspeichervorrichtung zu einem Systembereich einer Zielsystemspeichervorrichtung auszuführen, sodass eine Systemwiederherstellungsfunktion des zweiten Computers mit einem ausgewählten Satz der wiederhergestellten Wiederherstellungspunktdateien zur Wiederherstellung des Betriebssystems, wie zu dem entsprechenden Zeitpunkt beschaffen, ausgeführt werden kann und (2) während eines anschließenden Betriebsmodus mit voller Funktionalität zum Ausführen des Wiederherstellungsprogramms zur Wiederherstellung der Benutzerdateien aus der Wiederherstellungsspeichervorrichtung auf dem Computer für die anschließende normale Verwendung durch einen Benutzer des zweiten Computers.

9. Verfahren nach Anspruch 8, wobei:
das Bereitstellen des Backup-Dienstes die Verwendung einer Datenreduktionsmethode umfasst, welche für einen gegebenen Wiederherstellungspunkt das Empfangen und Speichern von weniger als all den Wiederherstellungspunktdateien des Wiederherstellungspunkts und für nicht empfangene und nicht gespeicherte Wiederherstellungspunktdateien das Speichern von Daten umfasst, die anzeigen, dass die Dateien mit entsprechenden Wiederherstellungspunktdateien eines vorherigen Wiederherstellungspunkts identisch sind; und
das Bereitstellen des Wiederherstellungsdienstes das Erstellen all der Wiederherstellungspunktdateien des gegebenen Wiederherstellungspunkts umfasst, wobei diejenigen Wiederherstellungspunktdateien, die für den gegebenen Wiederherstellungspunkt nicht empfangen und gespeichert wurden, von den entsprechenden Wiederherstellungspunktdateien des vorherigen Wiederherstellungspunkts, wie von den Daten angezeigt, kopiert werden.

10. Verfahren nach Anspruch 8, wobei jede der Wiederherstellungspunktdateien aus Blöcken besteht und wobei:
das Bereitstellen des Backup-Dienstes die Verwendung einer Datenreduktionsmethode umfasst, welche für eine bestimmte Wiederherstellungspunktdatei das Empfangen und Speichern nur derjenigen Blöcke der bestimmten Wiederherstellungspunktdatei umfasst, die sich verändert haben, seit eine vorherige Vollversion der bestimmten Wiederherstellungspunktdatei in das Backup-System kopiert wurde und das Speichern von Daten, die anzeigen, dass die bestimmte Wiederherstellungspunktdatei mit der vorherigen Vollversion der bestimmten Wiederherstellungspunktdatei mit Ausnahme der veränderten Blöcke identisch ist; und
das Bereitstellen des Wiederherstellungsdienstes das Erstellen der bestimmten Wiederherstellungspunktdatei durch die Anwendung der veränderten Blöcke für die vorherige Vollversion der bestimmten Wiederherstellungspunktdatei, wie von den Daten angezeigt, umfasst.

11. Verfahren nach einem der Ansprüche 8 bis 10, wobei:
der erste Computer einer von zwei oder mehreren Computern ist, die unter ihren jeweiligen Wiederherstellungspunktdateien beide die gleiche bestimmte Wiederherstellungspunktdatei umfassen;
das Bereitstellen des Backup-Dienstes die Verwendung einer Client-übergreifenden Pooling-Methode umfasst, welche die Pflege von nur einer gepoolten Kopie der bestimmten Wiederherstellungspunktdatei zusammen mit Daten umfasst, welche die zwei oder mehreren Computer identifizieren, welche die Kopie der Wiederherstellungspunktdatei teilen; und
das Bereitstellen des Wiederherstellungsdienstes das Bereitstellen der einen gepoolten Kopie der bestimmten Wiederherstellungspunktdatei auf der Grundlage der Daten umfasst.

12. Verfahren nach einem der Ansprüche 8 bis 10, wobei die Wiederherstellungsspeichervorrichtung ein entfernbares Speichermedium umfasst, ausgewählt aus der Gruppe, bestehend aus optischen Medien und Flash-Speicher, die mit einem physischen Eingangs-/Ausgangsanschluss des zweiten Computers verbunden werden können.

13. Verfahren nach einem der Ansprüche 8 bis 10, wobei sich der erste Computer von dem zweiten Computer unterscheidet.

14. Backup-System, umfassend einen oder mehrere Server-Computer, wobei mindestens einer der Server-Computer Folgendes umfasst:
einen Prozessor, einen Arbeitsspeicher, einen Speicher, eine Netzwerkschnittstelle und Eingangs-/Ausgangsschaltungen, die alle durch einen oder mehrere Verbindungsbusse verbunden sind; und
Software, die in dem Speicher gespeichert und durch den Prozessor von dem Arbeitsspeicher ausführbar ist, um ein Verfahren zur Bereitstellung von Backup- und Wiederherstellungsdiensten für einen oder mehrere Client-Computer auszuführen, wobei die Software geeignet ist, das Verfahren nach einem der vorhergehenden Ansprüche 8 bis 13 durchzuführen.

15. Backup-System nach Anspruch 14, wobei die Wiederherstellungsspeichervorrichtung ein entfernbares Speichermedium umfasst, ausgewählt aus der Gruppe, bestehend aus optischen Medien und Flash-Speicher, die mit einem physischen Eingangs-/Ausgangsanschluss des zweiten Client-Computers verbunden werden können.

## Revendications

1. Procédé selon lequel un ordinateur exécute une opération de sauvegarde et de restauration consistant:
en fonctionnement normal, à effectuer périodiquement une opération de sauvegarde au cours de laquelle l'ordinateur copie les fichiers utilisateur et les fichiers système du stockage source de l'ordinateur vers un système de secours séparé pour un stockage persistant dans ce dernier, les fichiers système comprenant des ensembles de fichiers de points de restauration du stockage source, les fichiers de points de restauration ayant été créés par un système d'exploitation de l'ordinateur et chaque ensemble de fichiers de points de restauration étant des constituants du système d'exploitation à un instant donné correspondant ; et
lors d'une opération de restauration ultérieure :
(1) à accéder à un dispositif de stockage de récupération rendu accessible à l'ordinateur, le dispositif de stockage de récupération stockant un programme de récupération et des copies des fichiers utilisateur et des fichiers système tels que stockés de manière persistante par le système de sauvegarde ;
(2) à exploiter l'ordinateur dans un mode de récupération à fonctionnalité limitée comprenant (a) l'exécution du programme de récupération pour restaurer les fichiers de points de restauration depuis le dispositif de stockage de récupération pour cibler le stockage de l'ordinateur, et (b) exécuter une fonction de restauration de système avec un ensemble sélectionné des fichiers de points de restauration pour restaurer le système d'exploitation tel que constitué à un instant donné correspondant ; et
(3) à exploiter ensuite l'ordinateur dans un mode d'exploitation à fonctionnalité intégrale comprenant (a) l'exécution du système d'exploitation tel que restauré, et (b) l'exécution du programme de récupération pour restaurer les fichiers utilisateur depuis le dispositif de stockage de récupération vers l'ordinateur pour une utilisation normale ultérieure de l'ordinateur par un utilisateur.

2. Procédé selon la revendication 1, dans lequel l'exécution de l'opération de sauvegarde comprend l'utilisation d'une technique de réduction de données qui consiste :
à déterminer, avant l'envoi d'un fichier de point de restauration particulier, si le fichier de point de restauration particulier a déjà été copié sur le système de sauvegarde dans une opération de sauvegarde précédente ; et à copier le fichier de point de restauration particulier sur le système de sauvegarde uniquement si le fichier de point de restauration particulier n'a pas déjà été ainsi copié sur le système de sauvegarde, et sinon à s'abstenir de copier le fichier de point de restauration particulier sur le système de sauvegarde.

3. Procédé selon la revendication 1, dans lequel l'exécution de l'opération de sauvegarde comprend l'utilisation d'une technique de réduction de données qui consiste :
dans le cadre de la copie d'un fichier de point de restauration particulier, à déterminer lesquels d'une pluralité de blocs du fichier de point de restauration particulier ont changé depuis qu'une version précédente du fichier de point de restauration particulier a été copiée dans le système de sauvegarde ; et à copier sur le système de sauvegarde uniquement les blocs du fichier de point de restauration particulier qui sont considérés comme ayant ainsi changé.

4. Procédé selon l'une quelconque des revendications 1 à 3, dans lequel le dispositif de stockage source est distinct du dispositif de stockage cible.

5. Procédé selon l'une quelconque des revendications 1 à 3, dans lequel le dispositif de stockage de récupération comprend un support d'informations amovible sélectionné parmi le groupe constitué de supports optiques et d'une mémoire flash, et dans lequel l'accès au dispositif de stockage de récupération comprend l'accès à un port d'entrée/sortie physique de l'ordinateur auquel le support d'informations amovible a été fixé.

6. Ordinateur, comprenant :
un processeur, une mémoire, un stockage, une interface réseau et un circuit d'entrée/sortie connectés entre eux par un ou plusieurs bus d'interconnexion ; et
un logiciel, comprenant un agent de sauvegarde et un système d'exploitation, stocké sur le stockage et exécutable par le processeur depuis la mémoire pour effectuer un procédé d'exécution d'opérations de sauvegarde et de restauration, le logiciel étant adapté pour exécuter le procédé selon l'une des revendications précédentes.

7. Ordinateur selon la revendication 6, dans lequel l'ordinateur comporte un port d'entrée/sortie physique auquel un support d'informations amovible peut être fixé, le support d'informations amovible étant sélectionné dans le groupe composé de supports optiques et de la mémoire flash, et dans lequel l'accès au dispositif de stockage de récupération inclut l'accès au port d'entrée/sortie physique de l'ordinateur.

8. Procédé selon lequel un système de sauvegarde et de restauration fournit des services de sauvegarde et de restauration à un ou plusieurs ordinateurs, qui consiste :
à fournir périodiquement un service de sauvegarde de la réception de fichiers utilisateur et de fichiers système depuis le premier des ordinateurs et à stocker les fichiers reçus de façon persistante, les fichiers système comprenant des ensembles de fichiers de points de restauration depuis une zone de système d'un dispositif de stockage de systèmes source du premier ordinateur, les fichiers de points de restauration ayant été créés par un système d'exploitation du premier ordinateur et chaque ensemble de fichiers de points de restauration étant des constituants du système d'exploitation à un instant donné correspondant ; et
à fournir ultérieurement un service de restauration à un deuxième ordinateur, le service de restauration comprenant la création d'un dispositif de stockage de récupération qui stocke un programme de récupération et des copies des fichiers utilisateur et des fichiers système tels que reçus par le système de sauvegarde lors de la fourniture du service de sauvegarde au premier ordinateur, le dispositif de stockage de récupération étant créé afin d'être utilisable par le deuxième ordinateur (1) dans un mode de récupération à fonctionnalité limitée pour exécuter le programme de récupération pour restaurer les fichiers de points de restauration depuis le dispositif de stockage de récupération vers une zone de système d'un dispositif de stockage de systèmes cible, de telle sorte qu'une fonction de restauration de système du deuxième ordinateur peut être exécutée avec un ensemble sélectionné de fichiers de points de restauration pour restaurer le système d'exploitation dans sa composition à un instant donné correspondant, et (2) lors d'un mode d'exploitation à fonctionnalité intégrale pour exécuter le programme de récupération pour restaurer les fichiers utilisateur depuis le dispositif de stockage de récupération vers l'ordinateur pour une utilisation normale ultérieure par un utilisateur du deuxième ordinateur.

9. Procédé selon la revendication 8, dans lequel :
la fourniture du service de sauvegarde inclut l'utilisation d'une technique de réduction de données qui comprend, pour un point de restauration donné, la réception et le stockage d'une quantité réduite de tous les fichiers de restauration du point de restauration, et pour les fichiers de point de restauration non-reçus et non stockés le stockage de données indiquant que les fichiers sont identiques aux fichiers de points de restauration correspondants d'un point de restauration précédent ; et la fourniture du service de restauration inclut la création de tous les fichiers de points de restauration du point de restauration donné,
ces fichiers de points de restauration qui n'ont pas été reçus et stockés pour le point de restauration donné étant copiés depuis les fichiers de points de restauration correspondants du point du point de restauration précédent, tel qu'indiqué par les données.

10. Procédé selon la revendication 8, dans lequel chacun des fichiers de points de restauration est constitué par des blocs, et dans lequel :
la fourniture du service de sauvegarde inclut l'utilisation d'une technique de réduction des données qui comprend, pour un fichier de point de restauration particulier, la réception et le stockage uniquement des blocs du fichier de points de restauration particulier qui ont changé depuis qu'une version intégrale précédente du fichier de point de restauration particulier a été copiée sur le système de sauvegarde, et le stockage de données indiquant que le fichier de point de restauration particulier est identique à la version intégrale précédente du fichier de point de restauration particulier, sauf pour les blocs modifiés ; et
la fourniture du service de restauration inclut la création du fichier de point de restauration particulier en appliquant les blocs modifiés à la version intégrale précédente du fichier de point de restauration particulier, tel qu'indiqué par les données.

11. Procédé selon l'une quelconque des revendications 8 à 10, dans lequel :
le premier ordinateur est l'un de deux ou plusieurs ordinateurs qui comprennent tous le même fichier de point de restauration particulier parmi leurs fichiers de points de restauration respectifs ;
la fourniture du service de sauvegarde inclut l'utilisation d'une technique de mise en commun inter-client qui comprend le maintien uniquement d'une copie de mise en commun du fichier de point de restauration particulier conjointement avec des données identifiant les deux ou plusieurs ordinateurs qui partagent la copie du fichier de point de restauration ; et la fourniture du service de restauration inclut la fourniture d'une copie de mise en commun du fichier de point de restauration particulier en fonction des données.

12. Procédé selon l'une quelconque des revendications 8 à 10, dans lequel le dispositif de stockage de récupération comprend un support d'informations amovible sélectionné parmi le groupe constitué de supports optiques et d'une mémoire flash qui peuvent être fixés à un port d'entrée/sortie physique du deuxième ordinateur.

13. Procédé selon l'une quelconque des revendications 8 à 10, dans lequel le premier ordinateur est distinct du deuxième ordinateur.

14. Système de sauvegarde comprenant un ou plusieurs ordinateurs serveurs, au moins l'un des ordinateurs serveurs comprenant :
un processeur, une mémoire, un stockage, une interface réseau et un circuit d'entrée/sortie tous connectés entre eux par un ou plusieurs bus d'interconnexion ; et
un logiciel stocké sur la mémoire et exécutable par le processeur depuis la mémoire pour exécuter un procédé de services de fourniture de sauvegarde et de restauration à un ou plusieurs ordinateurs clients, le logiciel étant adapté pour exécuter le procédé selon l'une des revendications précédentes 8 à 13.

15. Système de sauvegarde selon la revendication 14, dans lequel le dispositif de stockage de récupération inclut un support d'informations amovible sélectionné parmi le groupe constitué de supports optiques et d'une mémoire flash qui peuvent être fixés à un port d'entrée/sortie physique du deuxième ordinateur client.
